Europäisches Patentamt

European Patent Office

Office européen des brevets

(19)

(11) Numéro de publication: **0 251 958**
**B1**

(12) **FASCICULE DE BREVET EUROPEEN**

(45) Date de publication du fascicule du brevet: **27.06.90**

(51) Int. Cl.⁵: **B 60 P 3/22**

(21) Numéro de dépôt: **87440003.9**

(22) Date de dépôt: **16.01.87**

(54) **Citerne cylindrique pour produits fins.**

(30) Priorité: **21.05.86 FR 8607359**

(43) Date de publication de la demande:
**07.01.88 Bulletin 88/01**

(45) Mention de la délivrance du brevet:
**27.06.90 Bulletin 90/26**

(84) Etats contractants désignés:
**AT BE CH DE ES GB GR IT LI LU NL SE**

(56) Documents cités:
**FR-A-1 408 059**
**GB-A-1 308 976**

(73) Titulaire: **SPITZER-EUROVRAC SàRL**
**Zone Industrielle (BP 7)**
**F-67640 Fegersheim (FR)**

(72) Inventeur: **Gantzer, Patrick**
**19, route de Saverne**
**F-67490 Dettwiller (FR)**
Inventeur: **Verfaille, Pierre**
**Am Wachtbuckel 7**
**D-6951 Scharzach (DE)**
Inventeur: **Rappold, Pierre**
**Zone Industrielle**
**D-67460 Fegersheim (FR)**
Inventeur: **Witzany, Rudolf**
**Seestrasse 18**
**D-5322 Hof b. Slg. (DE)**

(74) Mandataire: **Arbousse-Bastide, Jean-Claude**
**Philippe**
**CABINET ARBOUSSE BASTIDE 20, rue de**
**Copenhague**
**F-67000 Strasbourg (FR)**

EP 0 251 958 B1

Courier Press, Leamington Spa, England.

## Description

La présente invention a pour objet une citerne cylindrique pour le transport en vrac de produits fins.

On sait que les produits fins sont fréquemment transportés en vrac dans des citernes basculantes installées sur un châssis de véhicule semi-remorque, les citernes les plus couramment utilisées à cette fin étant des cuves cylindriques fermées à leur partie antérieure par un fond bombé normalisé solidarisé au vérin hydraulique qui actionne leur basculement. Une citerne de ce type se trouve décrite dans le document GB—A—1,308,976.

Toutefois l'installation, sur la partie avant du châssis du véhicule, d'un vérin hydraulique, fréquemment associé à un second vérin du même type, entraîne un encombrement qui limite l'espace dévolu à la citerne, et par voie de conséquence son volume.

Le problème se posait donc de mieux exploiter l'espace délimité par le porte-à-faux du vérin élévateur et le pivot d'attelage du semi-remorque avec le véhicule tracteur.

La présente invention a pour but de présenter une solution à ce problème en proposant une citerne cylindrique dont le volume utile est sensiblement supérieur à celui des citernes conventionnelles.

La présente invention a ainsi pour objet une citerne cylindrique pour le transport en vrac de produits fins, du type comportant une cuve cylindrique fermée à son extrémité avant par un fond bombé normalisé, cette citerne se caractérisant essentiellement en ce qu'elle comporte, interposée entre la cuve cylindrique et le fond bombé normalisé, une virole taillée en onglet fixée par soudage à l'un et à l'autre et prolongeant la cuve cylindrique à sa partie supérieure, en sorte que le fond bombé occupe une position oblique, étant incliné vers l'avant du châssis.

La virole taillée en onglet interposée entre la cuve cylindrique et le fond bombé normalisé permet d'accroître sensiblement le volume de la citerne, et ce par la mise en oeuvre de moyens peu onéreux et simples à réaliser en chaudronnerie.

La présente invention sera mieux comprise à la lecture de la description qui suit et qui se réfère au dessin annexé, étant bien entendu que cette description ne présente aucun caractère limitatif vis-à-vis de l'invention.

Dans le dessin annexé:

—la figure 1 représente la partie antérieure d'une citerne selon l'état de la technique antérieure.

—la figure 2 représente la partie antérieure d'une citerne selon l'invention.

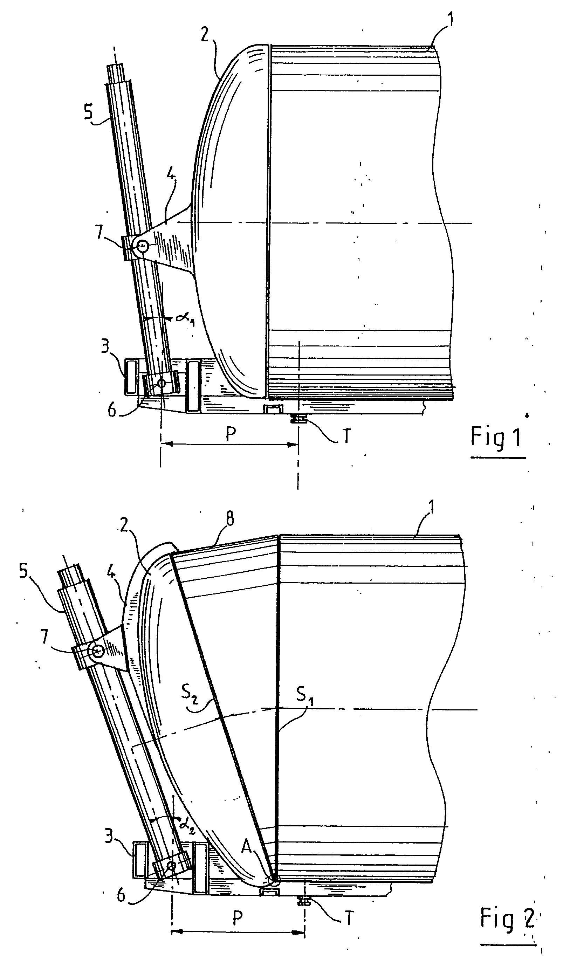

Si on se réfère d'abord à la figure 1, on voit la cuve cylindrique 1 d'une citerne conventionnelle installée sur un châssis 3 fermée à son extrémité antérieure par un fond bombé normalisé 2. Le fond bombé 2 est muni d'une ferrure 4 en forme de chape reliée à un vérin élévateur 5 au moyen de tourillons 7 autour desquels le vérin 5 peut osciller, pouvant par ailleurs osciller également autour de tourillons 6 sur lesquels il est monté à sa base. Le vérin 5 est incliné vers l'avant d'un angle $a_1$.

Ainsi qu'on peut le voir sur la figure, le vérin 5, une partie de la cuve 1 et le fond bombé 2 se trouvent en porte-à-faux dans le châssis 3 d'une certaine longueur P par rapport au pivot d'attelage T qui constitue également le point d'appui avant de la semi-remorque sur laquelle est embarquée la citerne.

Si on se réfère ensuite à la figure 2, on voit que la citerne selon l'invention, installée sur un châssis 3, comporte les mêmes éléments que la citerne conventionnelle de la figure 1, à savoir une cuve cylindrique 1, un fond bombé normalisé 2, un vérin élévateur 5 relié à ce dernier au moyen d'une ferrure 4 munie de tourillons 7, ledit vérin 5 étant monté oscillant sur des tourillons 6 solidaires du châssis 3.

La citerne selon l'invention se distingue toutefois de la citerne conventionnelle représentée à la figure 1 par la présence, entre la cuve cylindrique 1 et le fond bombé 2, d'une virole 8 taillée en onglet qui relie les sections circulaires $S_1$ et $S_2$ de la cuve 1 et du fond 2, prolongeant la cuve cylindrique 1 à sa partie supérieure et amenant le fond bombé 2 à basculer vers l'avant autour du point A qui constitue le point de jonction de la cuve 1 et du fond bombé 2. Il s'ensuit une inclinaison plus importante du vérin élévateur 5, qui se trouve incliné vers l'avant d'un angle $a_2$ supérieur à l'angle $a_1$ de la figure 1.

On constate à l'examen de cette figure 2, que le porte-à-faux P est le même que celui de la figure 1, mais que l'espace qu'il délimite est avantageusement utilisé, dans le cas de la citerne selon l'invention, pour augmenter le volume utile de cette dernière du volume délimité par la virole 8.

Il est à noter que la ferrure 4 présenté dans ce cas une forme adaptée à l'inclinaison du fond bombé 2 et du vérin élévateur 5.

La citerne selon l'invention présente l'avantage, déjà exposé, d'un volume utile sensiblement supérieur à celui des citernes conventionnelles de même encombrement et ce sans nécessiter la fabrication onéreuse d'un fond bombé de forme particulière.

Par ailleurs, la citerne selon l'invention offre l'avantage supplémentaire de permettre, pour un volume utile identique à celui des citernes conventionnelles, la réduction du porte-à-faux par une diminution de la longueur de la cuve cylindrique.

Il va de soi que la présente invention ne saurait être limitée à la description qui précède d'un de ses modes de réalisation, susceptible de subir un certain nombre de modifications sans pour autant sortir du cadre de l'invention.

## Revendication

Citerne cylindrique pour le transport en vrac de produits fins embarquée sur un châssis (3) de semi-remorque, montée basculante autour d'un axe solidaire de la partie arrière dudit châssis (3) grâce à un vérin élévateur (5) installé à la partie avant dudit châssis (3) et constituée d'une cuve cylindrique (1) fermée à son extrémité antérieure par un fond bombé normalisé (2) solidarisé audit vérin élévateur (5), caractérisée en ce que ledit fond bombé normalisé (2) est assemblé à ladite cuve cylindrique (1) par l'intermédiaire d'une virole (8) taillée en onglet fixée par soudage à l'un et à l'autre, entraînant l'inclinaison vers l'avant du fond bombé (2) et l'augmentation du volume utile de la citerne.

## Patentanspruch

Zylindrischer Tank für den Transport von lose Feinprodukten, der auf das Chasssis (3) eines Lastzugs verladen und kippbar um eine mit dem hinteren Teil des besagten Chassis (3) verbundene Achse montiert ist, durch einen, auf dem vorderen Teil des besagten Chassis (3) installierten Hesebock (5), wobei der Tank aus einer zylindrischen Wanne (1), die an ihrem vorderen Ende mit einem genormten gewölbtem Boden (2) abgeschlossen, der mit dem besagten Hebebock (5) verbunden ist, dadurch gekennzeichnet, dass der genormte gewölbte Boden (2) an die besagte zylindrische Wanne (1) über eine Zwinge (8) verbunden ist, die gehreförmig geschnitten ist und sowohl an das eine wie an das andere angeschweisst ist, was zur Schrägstellung des gewölbten Bodens (2) nach vorne und zur Erhöhung des nützlichen Volumens des Tanks führt.

## Claim

Cylindrical tanker for the bulk transporation of fine products, borne on a semitrailer chassis (3) mounted to tip around a spindle integral with the rear part of said chassis (3) due to a hydraulic jack (5) installed on the front part of said chassis (3) and consisting of a cylindrical tank (1) closed at its front end by a standardised convex bottom (2) integral with said hydraulic jack (5), characterised in that said standardised convex bottom (2) is fixed to said cylindrical tank (1) by means of a mitred hoop (8) welded to both, resulting in a forward slant of the convex bottom (2) and an increase in the useful volume of the tanker.

EP 0 251 958 B1

Fig 1

Fig 2